# EUROPÄISCHE PATENTSCHRIFT

(11) **EP 0 897 773 B1**
(45) Veröffentlichungstag und Bekanntmachung des Hinweises auf die Patenterteilung: **08.01.2003**
(21) Anmeldenummer: 98401756.6
(22) Anmeldetag: 10.07.1998
(51) Int. Cl.: B23K 26/00

(54) **Vorrichtung zum Längsnahtschweissen von Metallrohren**
Device for longitudinal seam welding of metal tubes
Dispositif de soudage de cordons longitudinaux de tubes en métal

(30) Priorität: 20.08.1997 DE 19736042
(43) Veröffentlichungstag der Anmeldung: 24.02.1999
(73) Patentinhaber: Nexans, 75008 Paris (FR)
(72) Erfinder: Staschewski, Harry, 30853 Langenhagen (DE); Wandelt, Siegfried, 30855 Langenhagen (DE)
(74) Vertreter: Döring, Roger, Dipl.-Ing.

(56) Entgegenhaltungen:
- DE-A- 19 501 945
- PATENT ABSTRACTS OF JAPAN vol. 010, no. 331 (M-533), 11. November 1986 (1986-11-11) & JP 61 135497 A (NIPPON STEEL CORP;OTHERS: 01), 23. Juni 1986 (1986-06-23)
- PATENT ABSTRACTS OF JAPAN vol. 012, no. 195 (M-705), 7. Juni 1988 (1988-06-07) & JP 63 002577 A (SANOYASU:KK), 7. Januar 1988 (1988-01-07)
- PATENT ABSTRACTS OF JAPAN vol. 016, no. 557 (M-1340), 27. November 1992 (1992-11-27) & JP 04 210887 A (TOSHIBA CORP), 31. Juli 1992 (1992-07-31)

## Beschreibung

Die Erfindung betrifft eine Vorrichtung zum Längsnahtschweißen von Metallrohren mit Hilfe einer Laserschweißeinrichtung nach dem Oberbegriff des Anspruchs 1. Die Gattung ist aus der DE-A-195 01 945 bekannt.

Aus der DE 44 34 134 A1 ist ein Verfahren zur Herstellung eines längsnahtgeschweißten Metallrohres bekannt, bei welchem ein Metallband von einer Vorratsspule abgezogen und durch ein Formwerkzeug zu einem Rohr mit Längsschlitz geformt, und der Längsschlitz durch eine Laserschweißeinrichtung verschweißt wird. Nachteilig bei diesem Verfahren ist, daß die Gefahr besteht, daß von der Rohroberfläche reflektierte Laserstrahlen sich unkontrolliert ausbreiten können und sowohl zu Verletzungen von Menschen als auch zu Beschädigungen von Gegenständen führen können.

Es ist bekannt, daß nur ein geringer Anteil der Laserenergie als Schweißenergie zur Verfügung steht, und ein größerer Teil reflektiert wird. Die Gefahr besteht darin, daß das Laserlicht nicht im sichtbaren Wellenlängenbereich liegt, so daß hinsichtlich des Strahlenschutzes ein höherer Aufwand getrieben werden muß.

Aus der DE 195 01 945 A1 ist ein Verfahren zur Herstellung längsnahtgeschweißter Metallrohre bekannt, bei dem der Längsschlitz des zu verschweißenden Rohres durch zwei Laserschweißköpfe verschweißt wird, die in Längsrichtung des Rohres geneigt sind. Zwischen den Laserschweißköpfen ist oberhalb der Schweißnaht eine wassergekühlte Schürze vorgesehen, welche die reflektierten Laserstrahlen absorbieren soll und die bei der Absorption aufgenommene Wärme über das Kühlwasser abtransportieren soll. Wegen des geringen Abstandes, der zwischen den Laserschweißköpfen eingehalten werden muß, ist die Funktion dieser Schürze sehr eingeschränkt.

Aus der JP-A-61 135 947 ist eine Abschirmung für reflektierte Laserstrahlen bekannt. Der Laserstrahl trifft senkrecht auf das Werkstück, von welchem der reflektierte Laserstrahl in Richtung auf eine **Schutzplatte**, die wassergekühlt ist und an ihrer dem Werkstück zugekehrten Oberfläche absorbierend ausgebildet ist.

Der vorliegenden Erfindung liegt die Aufgabe zugrunde, die Vorrichtung der eingangs erwähnten Art dahingehend zu verbessern, daß die von der Rohroberfläche reflektierten Strahlen weitestgehend unschädlich gemacht werden, und damit eine Gefährdung des Bedienungspersonals und anderer anwesender Personen weitestgehend ausgeschlossen ist.

Diese Aufgabe wird durch die im Kennzeichen des Anspruchs 1 erfaßten Merkmale gelöst. Weitere vorteilhafte Ausgestaltungen der Erfindung sind in den Unteransprüchen erfaßt.

Der wesentliche Vorteil der Erfindung ist darin zu sehen, daß durch die Vielfachablenkung der Laserstrahlen innerhalb der als Gehäuse ausgebildeten Strahlenfalle und die geschwärzte Oberfläche die Energie der Laserstrahlen in Wärmeenergie umgewandelt wird und durch die Kühlung der Wandungen die Wärmeenergie abtransportiert werden kann.

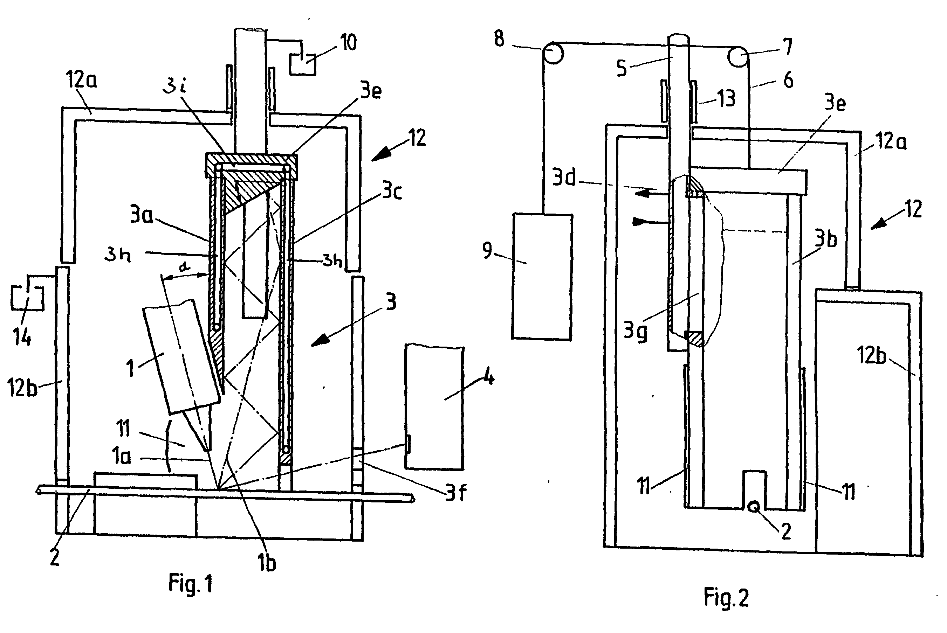

Die Erfindung ist anhand des in den Figuren 1 und 2 schematisch dargestellten Ausführungsbeispiels näher erläutert.

Figur 1 zeigt eine seitliche Ansicht der Vorrichtung im Bereich der Schweißvorrichtung.
Figur 2 zeigt eine Ansicht in Längsrichtung auf die Vorrichtung im Bereich der Schweißvorrichtung.

Ein Laserschweißkopf 1 ist unter einem Winkel α zur Vertikalen derart angeordnet, daß sein fokussierter Strahl 1a auf die nicht näher bezeichnete Längsnaht eines aus einem Metallband in kontinuierlicher Arbeitsweise geformten Schlitzrohres 2 gerichtet ist.

In Durchlaufrichtung des Rohres gesehen hinter dem Laserschweißkopf 1 ist eine Strahlenfalle 3 angeordnet, die an ihrer dem Laserschweißkopf 1 zugekehrten Seite eine Ausnehmung aufweist, die den Laserschweißkopf 1 zum Teil aufnimmt. Laserschweißkopf 1 und Strahlenfalle 3 sind so zueinander angeordnet, daß die reflektierten Laserstrahlen 1 b in das Innere der Strahlenfalle 3 eingeleitet werden. Dort werden sie mehrfach an den Wänden reflektiert, wobei bei jeder Reflexion ein Teil der Laserenergie von der Wandung absorbiert und in Wärmeenergie umgewandelt wird. Durch ein Rohrsystem innerhalb der Wandung der Strahlenfalle 3 wird Kühlwasser geleitet, wodurch die Wärme abgeführt wird.

Die Strahlenfalle 3 ist als im Querschnitt rechteckiges Gehäuse ausgebildet, deren Seitenwände 3a, 3b, 3c und 3d Kupferplatten sind, die zu dem Gehäuse vereinigt vorzugsweise zusammengeschraubt sind. Jede der Kupferplatten 3a, 3b, 3c und 3 d weist Längs- und Querbohrungen 3h auf. Eine Strahlenumlenkplatte 3e deckt das Gehäuse nach oben hin ab. Auch die Strahlenumlenkplatte besitzt durchgehende Bohrungen 3i. Die einzelnen Bohrungen 3h bzw. 3i der Platten 3a, 3b, 3c, 3d und 3e sind derart miteinander verbunden, daß sich ein durchgehendes Rohrsystem bildet, welches mit Kühlwasser beaufschlagt werden kann.

Die nach innen weisende Oberfläche der Strahlenumlenkplatte 3e ist in Richtung des Rohres 2 unter einem Winkel zur Horizontalen geneigt, der dem doppelten Wert des Neigungswinkels α des Laserschweißkopfes 1 entspricht. Durch diese Maßnahme wird erreicht, daß die reflektierten Strahlen 1b mehrfach von der inneren Oberfläche der Platten 3a, 3b, 3c und 3d umgelenkt werden.

Zur Verbesserung der Absorption der Laserenergie ist die innere Oberfläche der Platten 3a, 3b, 3c, 3d und 3e schwarz, vorzugsweise schwarz verzinkt.

Da für den Laserschweißprozeß Schutzgas am Schweißpunkt zugeführt werden muß, und Gase durch Verbrennen von Fettresten und anderen Verunreinigungen auf der Rohroberfläche entstehen, ist eine kontinuierliche Absaugung erforderlich. Hierzu weist die Platte 3d einen Längsschlitz 3g auf, an den ein rechteckförmiges Absaugrohr 5 derart angebracht ist, daß über eine dem Längsschlitz 3g entsprechende Öffnung im Absaugrohr 5 ein Gasabtransport geschehen kann.

Die Strahlenfalle 3 ist in vertikaler Richtung verschiebbar, d. h. anhebbar und absenkbar angeordnet. Zur Vereinfachung des Anhebens und Absenkens ist ein Seil 6 an der Strahlenumlenkplatte 3e befestigt und über Rollen 7 und 8 geleitet. Am freien Ende des Seiles 6 ist ein Gewicht 9 befestigt, welches geringfügig leichter als das Gesamtgewicht der Strahlenfalle 3 ist. Im abgesenkten Zustand d. h. im Betriebszustand wird ein Sicherungsschalter 10 betätigt, der erst ein Einschalten des Laserschweißkopfes 1 ermöglicht. Als weitere Schutzmaßnahme sind außen an den Platten 3b und 3d Schutzbleche 11 vorgsehen.

Als zusätzliche Sicherheitsmaßnahme ist das Gehäuse 3 von einem weiteren Strahlenschutzgehäuse 12 umgeben, welches aus einem feststehenden Oberteil 12a und einem quer zur Rohrlängsachse verschiebbaren zweigeteilten Unterteil 12b besteht. In Unterteil (12b) ist eine Öffnung 3f vorgesehen, die eine Beobachtung des Schweißpunktes mit einer Videokamera 4 ermöglich.

Das Strahlenschutzgehäuse 12 besteht aus z. B. Polymethylmethacrylat, welches z. B. unter dem Handelsnamen Plexiglas auf dem Markt erhältlich ist. Dieses Material ist durchsichtig, so daß der Fertigungsprozeß überwacht werden kann. Bei Beaufschlagung mit Laserstrahlung verformt sich dieses Material je nach Intensität der Strahlung zunächst und erst in einer nächsten Stufe entsteht ein Loch in der Wandung.

Das Absaugrohr 5 ist durch eine Öffnung mit Führung 13 durch die Dachwandung des Gehäuseteils 12a gleitend hindurchgeführt.

An dem Strahlenschutzgehäuse 12 ist ebenfalls ein Sicherheitsschalter 14 vorgesehen, der so geschaltet ist, daß die Anlage erst freigegeben wird, wenn das Strahlenschutzgehäuse 12 geschlossen ist.

## Patentansprüche

1. Vorrichtung zum Längsnahtschweißen von Metallrohren, bestehend aus einer ein kontinuierlich zugeführtes Metallband zum Schlitzrohbr formenden Rohrformvorrichtung sowie einer den Längsschlitz des Rohres verschweißenden Schweißeinrichtung, wobei die Schweißeinrichtung eine Laserschweißeinrichtung mit einem unter einem Winkel zur Vertikalen geneigten Laserschweißkopf ist, **dadurch gekennzeichnet, daß** hinter dem Laserschweißkopf (1) eine Strahlenfalle (3) für reflektierte Laserstrahlen (1b) angeordnet ist, die aus einem metallischen Gehäuse mit einer wassergekühlten Wandung besteht, wobei die innere Oberfläche des Gehäuses geschwärzt ist und daß die Strahlenfalle (3) derart zum Laserschweißkopf (1) angeordnet ist, daß die reflektierten Laserstrahlen (1b) in das Gehäuseinnere eingeleitet werden.

2. Vorrichtung nach Anspruch 1, **dadurch gekennzeichnet, daß** das Gehäuse einen rechteckigen Querschnitt mit vier Seitenwänden (3a,3b,3c,3d) und einer dem Rohr (2) abgekehrten Dachwand (3e) aufweist und daß in der dem Laserschweißkopf (1) zugekehrten Wand (3a) eine Öffnung vorgesehen ist, innerhalb derer der Laserschweißkopf (1) in dem Gehäuse integriert ist.

3. Vorrichtung nach Anspruch 1 oder 2, **dadurch gekennzeichnet, daß** jede der Seitenwände (3a,3b,3c,3d) und die Dachwand (3e) ein Kanalsystem aufweisen, daß die Kanalsysteme miteinander verbunden sind und das verbundene Kanalsystem einen Wasserzulauf und einen Wasserablauf aufweist.

4. Vorrichtung nach einem der Ansprüche 2 und 3, **dadurch gekennzeichnet, daß** die Seitenwände (3a,3b,3c,3d) und die Dachwand (3e) aus Kupfer bestehen.

5. Vorrichtung nach einem der Ansprüche 2 bis 4, **dadurch gekennzeichnet, daß** die innere Oberfläche der Dachwand (3e) unter einem Winkel 2α zur Horizontalen verläuft, wobei α der Neigungswinkel des Laserschweißkopfes (1) zur Vertikalen ist.

6. Vorrichtung nach einem der Ansprüche 2 bis 5, **dadurch gekennzeichnet, daß** zumindest in einer der Wände (3d) eine Öffnung (3g) vorgesehen ist, die mit einem Absaugrohr (5) verbunden ist.

7. Vorrichtung nach einem der Ansprüche 1 bis 6, **dadurch gekennzeichnet, daß** das Gehäuse von einem weiteren Strahlenschutzgehäuse (12) umgeben ist.

8. Vorrichtung nach Anspruch 7, **dadurch gekennzeichnet, daß** Gehäuse in dem Strahlenschutzgehäuse (12) anhebbar ist.

9. Vorrichtung nach Anspruch 8, **dadurch gekennzeichnet, daß** das Gehäuse und das Strahlenschutzgehäuse (12) im abgesenkten Zustand je einen Sicherheitsschalter (10,14) betätigen.

10. Vorrichtung nach einem der Ansprüche 7 bis 9, **dadurch gekennzeichnet, daß** in der oberen Wandung des Strahlenschutzgehäuses (12) eine Öffnung vorgesehen ist, durch welche das Ausgangsrohr (5) hindurchgeleitet ist.

## Claims

1. A device for longitudinal seam welding of metal tubes, consisting of a tube forming device creating a slotted tube from a continuously fed metal band and a welding device for welding the longitudinal seam of the tube, wherein the welding device is a laser welding device with a laser welding head tilted at an angle with respect to the vertical axis, **characterized in that** behind the laser welding device (1), there is a beam trap (3) for reflected laser beams (1b), wherein the beam trap consist of a metal casing with a water-cooled wall, wherein the inside surface of the casing is blackened, and wherein the beam trap (3) is aligned to the laser welding head (1) are such a manner that the reflected laser beams (1b) are guided to the inside of the casing.

2. A device according to claim 1 **characterized in that** the casing has a rectangular cross section with four side walls (3a, 3b, 3c, 3d) and a top cover (3e) facing away from the tube (2) and that an opening is provided in the wall (3a) facing the laser welding head (1) and the laser welding head (1) is integrated in this opening.

3. A device according to claim 1 or 2 **characterized in that** each of the side walls (3a, 3b, 3c, 3d) and a top cover (3e) are equipped with a channel system, that the channel systems are connected to each other, and that the connected channel system has a coolant supply and a coolant exit.

4. A device according to claim 2 and 3 **characterized in that** the side walls (3a, 3b, 3c, 3d) and the top cover (3e) are made of copper.

5. A device according to one of the claims 2 to 4 **characterized in that** the inner surface of the top cover (3e) is at an angle 2α to the horizontal axis, where α is the tilt angle of the laser welding head (1) with respect to the vertical axis.

6. A device according to one of the claims 2 to 5 **characterized in that** in at least one of the walls (3d) an opening (3g) is provided, which is connected to a suction tube, (5).

7. A device according to one of the claims 2 to 6 **characterized in that** the casing is surrounded by an additional beam protection casing (12).

8. A device according to claim 7 **characterized in that** the casing can be raised inside the beam protection casing (12).

9. A device according to claim 8 **characterized in that** the casing and the beam protection casing (12) each trigger a safety switch (10, 14) when they are lowered.

10. A device according to one of the claims 7 to 9 **characterized in that** an opening is provided in the top cover of the beam protection casing (12) through which the exit tube (5) is led.

## Revendications

1. Dispositif de soudage longitudinal de tubes métalliques, composé d'un outil de formage transformant une bande métallique se déroulant en continu en un tube à fente longitudinale ainsi que d'un dispositif de soudage de la fente longitudinale, le dispositif de soudage étant un dispositif de soudage au laser avec une tête de soudage au laser disposée sous un certain angle par rapport à la verticale, **caractérisé par le fait qu'**un piège à rayons (3) pour les rayons laser réfléchis (1b) positionné derrière la tête de soudage au laser (1), composé d'un boîtier métallique avec des parois refroidie à l'eau, la surface intérieure du boîtier étant noircie et que le piège à rayons (3) est ainsi positionné par rapport à la tête de soudage laser (1) que les rayons laser réfléchis (1b) sont dirigés vers l'intérieur du boîtier.

2. Dispositif selon la revendication 1, **caractérisé par le fait que** le boîtier présente une section rectangulaire avec quatre parois latérales (3a, 3b, 3c et 3d) ainsi qu'une paroi supérieure (3e) face au tube (2) et qu'il est prévu dans la paroi (3a) orientée vers la tête de soudage au laser (1) une ouverture qui permet d'intégrer la tête de soudage au laser (1) dans le boîtier.

3. Dispositif selon la revendication 1 ou 2, **caractérisé par le fait que** les parois latérales (3a, 3b, 3c et 3d) et la paroi supérieure (3e) présentent chacune un système de canaux, que ces systèmes de canaux sont reliés entre eux et que le système de canaux relié présente une arrivée et une sortie d'eau.

4. Dispositif selon une des revendications 2 et 3, **caractérisé par le fait que** les parois latérales (3a, 3b, 3c et 3d) et la paroi supérieure (3e) sont en cuivre.

5. Dispositif selon une des revendications 2 à 4, **caractérisé par le fait que** la surface intérieure de la paroi supérieure (3e) dans un angle 2α par rapport à l'horizontale et que α représente l'angle d'inclinaison de la tête de soudage (1) par rapport à la verticale.

6. Dispositif selon une des revendications 2 à 5, **caractérisé par le fait qu'**il est prévu, dans au moins une des parois (3d) une ouverture (3g) qui est reliée à un tube d'aspiration (5).

7. Dispositif selon une des revendications 1 à 6, **caractérisé par le fait que** le boîtier est entouré d'un boîtier supplémentaire de protection contre les rayons (12).

8. Dispositif selon la revendication 7, **caractérisé par le fait que** le boîtier peut être relevé dans le boîtier de protection contre les rayons (12).

9. Dispositif selon la revendication 8, **caractérisé par le fait que** le boîtier et le boîtier de protection contre les rayons (12) actionnent chacun un interrupteur de sécurité (10, 14) en position basse.

10. Dispositif selon une des revendications 7 à 9, **caractérisé par le fait qu'**il est prévu, dans la paroi supérieure du boîtier de protection contre les rayons (12) une ouverture par laquelle le tube d'aspiration (5) est introduit.
